Europäisches Patentamt

European Patent Office

Office européen des brevets

(11) Veröffentlichungsnummer: **0 269 079 B1**

(12) **EUROPÄISCHE PATENTSCHRIFT**

(45) Veröffentlichungstag der Patentschrift: **21.04.93**

(21) Anmeldenummer: **87117357.1**

(22) Anmeldetag: **25.11.87**

(51) Int. Cl.⁵: **C09B 67/50**, //C09B67/04, C09B67/12, C09D7/00, C08J3/20

(54) **Feinteiliges, transparentes metallfreies Phthalocyanin der X-Modifikation und seine Verwendung als Pigment.**

(30) Priorität: **27.11.86 DE 3640592**

(43) Veröffentlichungstag der Anmeldung:
**01.06.88 Patentblatt 88/22**

(45) Bekanntmachung des Hinweises auf die Patenterteilung:
**21.04.93 Patentblatt 93/16**

(84) Benannte Vertragsstaaten:
**CH DE GB LI**

(56) Entgegenhaltungen:
**US-A- 3 594 163**
**US-A- 3 657 272**
**US-A- 4 098 795**
**US-E- 27 117**

**CHEMICAL ABSTRACTS, Band 105, Nr. 8, August 1986, Seiten 89,90, Zusammenfassung Nr. 62214t, Columbus, Ohio, US; & JP-A-60 243 089 (DAINIPPON INK AND CHEMICALS, INC. et al.) 03-12-1985**

(73) Patentinhaber: **BASF Aktiengesellschaft**
**Carl-Bosch-Strasse 38**
**W-6700 Ludwigshafen(DE)**

(72) Erfinder: **Hauser, Peter, Dr.**
**Saarstrasse 2**
**W-6703 Limburgerhof(DE)**
Erfinder: **Radtke, Volker, Dr.**
**Barbarossastrasse 4**
**W-6733 Hassloch(DE)**

**Beschreibung**

Die vorliegende Erfindung betrifft eine neue Pigmentform des metallfreien Phthalocyanins der X-Modifikation sowie deren Verwendung als Pigment.

In der US-A-3 357 989 wird ein metallfreies Phthalocyanin der X-Modifikation beschrieben. Seine Herstellung erfolgt durch Schwefelsäurebehandlung von $\alpha$-Phthalocyanin. Nachdem das Reaktionsprodukt von der Schwefelsäure abgetrennt ist, wird es anschließend einer Trockenmahlung unterworfen.

Gegenstand der US-A-3 594 163 ist ein weiteres Verfahren zur Herstellung von metallfreiem Phthalocyanin der X-Modifikation. Hierbei wird handelsüblichem metallfreiem $\alpha$-Phthalocyanin eine kleine Menge metallfreies Phthalocyanin der X-Modifikation zugemischt und diese Mischung in einem inerten Lösungsmittel bei einer Temperatur von ca. 25°C gerührt oder gemahlen.

Aufgabe der vorliegenden Erfindung war es, eine Pigmentform aufzufinden, die dem Miloriblau (C.I. Pigment Blue 27; C.I. Nr. 77 510) in coloristischen Eigenschaften möglichst nahekommt, ohne dessen anwendungstechnische Nachteile zu besitzen.

Die Aufgabe wird mit dem Pigment der vorliegenden Erfindung gelöst.

Dementsprechend betrifft die Erfindung ein feinteiliges, transparentes metallfreies Phthalocyanin der X-Modifikation, das eine spezifische Oberfläche von 75 bis 120 m$^2$/g aufweist und bei dem mindestens 80 Gew.% der Phthalocyaninteilchen einen Stokes-äquivalenten Durchmesser von $\leq 0,12$ $\mu$m aufweisen.

Das erfindungsgemäße X-Phthalocyanin wird vorteilhaft erhalten, wenn man $\alpha$-Phthalocyanin durch intensives Trockenmahlen zunächst in ein Gemisch überführt, das aus der $\alpha$- und der X-Modifikation besteht. Der Gehalt an X-Phthalocyanin soll dabei zwischen 40 und 75 Gew.%, bezogen auf die Mischung, liegen.

Daran anschließend wird das Gemisch einer Lösungsmittelbehandlung unterworfen. Dazu wird das $\alpha$/X-Phthalocyaningemisch in einem inerten organischen Lösungsmittel bei einer Temperatur von 20°C bis zur Siedetemperatur des Lösungsmittels ca. 2 bis 6 Stunden gerührt. Danach wird das entstandene Phthalocyanin der X-Modifikation vom Lösungsmittel abgetrennt, mit Wasser nachgewaschen und getrocknet.

Der Trockenmahlprozeß wird vorteilhafterweise in einer Mühle, z.B. in einer Kugel-, Planeten-, Drehrohr oder Schwingmühle bei einer Temperatur von 40 bis 80°C durchgeführt. Als Mahlkörper können Kugeln, Zylinder und konische Mahlkörper aus verschleiß- und abriebfesten Materialien wie Stahl, Zirkonoxid oder Achat verwendet werden.

Zur Lösungsmittelbehandlung sind beispielsweise Alkohole, insbesondere Alkanole wie Methanol, Ethanol, Propanol, Isopropanol, Butanol, Isobutanol, sec-Butanol, tert-Butanol, Pentanol und Hexanol, Ketone wie Aceton, Methylethylketon oder Methylisobutylketon, Ether wie Methyl-tert-butylether, Glykolmono-C$_1$-C$_4$-alkylether und deren Ester wie Ethylenglykolmonobutylether, dessen Acetat oder Tetrahydrofuran und Carbonsäurenitrile wie Acetonitril oder Gemische dieser Lösungsmittel geeignet.

Besonders günstige Lösungsmittel sind Ethanol, Propanol, Isopropanol, Butanol, Isobutanol, Methylethylketon, Methylisobutylketon, Ethylenglykolmonobutylether, dessen Acetat, Tetrahydrofuran oder deren Gemische.

Um die Ausbildung von $\beta$-Phthalocyanin zu unterdrücken, hat es sich in manchen Fällen als zweckmäßig erwiesen, die Behandlung mit dem inerten organischen Lösungsmittel zusätzlich in Gegenwart von Wasser durchzuführen, wobei der Wasseranteil 20 bis 60 Gew.%, bezogen auf das Flüssigkeitssystem, betragen sollte.

Es kann auch von Vorteil sein, daß bei der Lösungsmittelbehandlung zusätzlich kristallisationshemmende Additive und Hilfsmittel, wie sie beispielsweise in der DE-A- 2 516 054 oder DE-A-2 415 753 oder in Pigment Handbook, Vol. 3. Seiten 157 f., John Wiley and Sons, New York, 1973, beschrieben sind, zugegen sind. Weiterhin kann es auch vorteilhaft sein, dem erfindungsgemäßen feinteiligen, transparenten, metallfreien X-Phthalocyanin rekristallisationshemmende Additive und Hilfsmittel hinzuzufügen, um seine Rekristallisation bei späterer Anwendung in lösungsmittelhaltigen Bindemittelsystemen zu unterdrücken.

Eine röntgenographische Analyse des erfindungsgemäßen Produktes zeigt, daß es ausschließlich X-Modifikation besitzt. Es liegt aber in einem erheblich feinteiligeren Zustand vor als das bekannte Phthalocyanin mit X-Modifikation.

Dementsprechend besitzt das neue feinteilige, transparente metallfreie Phthalocyanin der X-Modifikation eine deutlich höhere spezifische Oberfläche als die entsprechenden Produkte des Standes der Technik. Während das erfindungsgemäße X-Phthalocyanin eine spezifische Oberfläche von 75 bis 120 m$^2$/g aufweist, zeigt ein analog Beispiel 1 der US-A-3 594 163 hergestelltes Produkt den Wert 50 m$^2$/g, sowie ein analog Beispiel 1 der US-A-3 357 989 hergestelltes Produkt den Wert 6 m$^2$/g. Bei dem nach US-A-3 594 163, Beispiel 1 erhaltenen X-Phthalocyanin weisen 80 Gew.% der Teilchen einen Stokes-äquivalenten Durchmesser von $\leq 0,18$ $\mu$m auf.

Die Messung der spezifischen Oberfläche erfolgt durch Stickstoff-Adsorption gemäß DIN 66 131. Der mittlere Teilchendurchmesser der Kristalle kann aus elektronenmikroskopischen Aufnahmen abgeschätzt werden. Entscheidend für das koloristische Verhalten sind jedoch die volumenbezogenen Verteilungen der Durchmesser der Teilchen, d.h. der Kristalle, der Kristallaggregate und der Agglomerate, die von dispergierten Proben der X-Phthalocyanine mittels einer Scheibenzentrifuge (Farbe + Lacke, 83 (1977), 886f und 76 (1970), 545f.) bestimmt werden. Hierzu werden 3 g Pigment mit 7 g Grindingbase 100 S® (Lawter Chemicals) auf einem Labordreiwalzenstuhl (Fa. Bühler) mit zwei Passagen bei 5 bar Anpreßdruck und gegebenenfalls mit weiteren Passagen bei 15 bar Anpreßdruck dispergiert bis die Körnigkeitswerte mit dem Grindometer (DIN 53 203) unter 5 $\mu$m liegen. Danach werden die 30 Gew.%. Pigment enthaltenden Farben mit einer Harzlösung aus 10 Teilen Albertol KP 648L® (Chemische Werke Albert, Wiesbaden), 65 Teilen Solvenon I® (BASF) und 25 Teilen Chloroform auf 0,2 Gew.% Pigment verdünnt. Diese verdünnten Pigmentdispersionen werden - wie in Farbe + Lacke beschrieben - einer Sedimentationsanalyse in der Scheibenzentrifuge unterworfen und daraus volumenbezogene Verteilungen der Stokes-äquivalenten Durchmesser bestimmt. Bei allen später angeführten X-Phthalocyaninen der Beispiele (1 bis 6) resultieren angenähert monomodale, logarithmische Verteilungen (DIN 66 144), die durch die Angaben der Mediandurchmesser $d_{50,3}$ und der Standardabweichung S charakterisiert sind. Diese Feinheitsparameter werden als pigmenttypische Werte angesehen und neben den spezifischen Oberflächen in der Tabelle zu den Beispielen 1 bis 6 angeführt.

Das erfindungsgemäße Phthalocyanin kann vorteilhaft als Pigment verwendet werden.

Beispielsweise eignet es sich in günstiger Weise als Pigment in Lacken, wo es dem Miloriblau im Farbton äußerst nahekommt, ohne aber dessen anwendungstechnische Nachteile zu besitzen.

Bekanntlich liegt das Haupteinsatzgebiet von Miloriblau (auch bekannt als Berliner Blau, Eisenzcyanblau, C.I. Pigment Blue 27; C.I. Nr. 77 510) in der Automobillackierung. Es wird dort überwiegend für tiefe, blauschwarze Unilackierungen eingesetzt. Für diesen Verwendungzweck ist allein seine Koloristik ausschlaggebend, denn es besitzt einen tiefen, dunklen und vor allem grünstichigen blauen Vollton. In seinen sonstigen anwendungstechnischen Eigenschaften weist das Pigment allerdings eine Reihe von Nachteilen auf.

Trotz seines oft auch verwendeten Namens Non Bronze-Blau neigt Miloriblau nämlich relativ rasch zum Bronzieren. Darüber hinaus verkürzt es das Pot Life von 2K-Lacken. Das Pigment ist nur mäßig beständig gegen Laugen sowie Oxidations- und Reduktionsmittel. Es verändert seinen Farbton häufig noch in den ersten 24 Stunden nach der Applikation und ist nur mäßig wetterecht in konventionellen, d.h. lösungsmittelreichen Lacken sowie wettertechnisch unbrauchbar in einigen High Solids-Systemen. Ferner kann es nicht eingesetzt werden in Wasserbasislacken, weil die dort verwendeten wäßrigen Latices und Dispersionen in Gegenwart von Miloriblau koagulieren.

Bislang hat es daher nicht an Versuchen gefehlt, Ersatzprodukte für Miloriblau zu finden, die bei möglichst gleicher oder ähnlicher Koloristik anwendungstechnische Vorteile bieten.

So verwendete man hochtransparente Formen des $\alpha$-Kupferphthalocyanins (C.I. Pigment Blue 15:1 und 15:2). Diese Pigmente besitzen bei Applikation in deckender Schicht einen tiefen und dunklen Farbton. Im Vergleich zu Miloriblau ist ihr Streuvermögen aber immer noch relativ hoch. Daher zeigen solche Lackierungen nicht den gewünschten grünstichig-blauen Farbton, sondern eine rotstichig-blaue Nuance. Diese ist auf das Streuvermögen der CuPc-Kristalle zurückzuführen (11. Fatipec-Kongress 1972, Edizioni Ariminum, Milano 1972, S. 551 ff.).

Eine weitere Möglichkeit Miloriblau in tiefblauen Unis zu ersetzen, wurde in den sogenannten Non Flop-Blues gesehen. Es handelt sich dabei um $\alpha$-Kupferphthalocanine mit hohem Chlorgehalt (5 bis 14 Gew.%). Dieser hohe Chlorgehalt bedingt eine Farbtonverschiebung in Richtung grün im Purton und in der Weißaufhellung. Verglichen mit den hochtransparenten Formen des $\alpha$-Kupferphthalocyanins erhält man mit diesen Pigmenten Volltonlackierungen, die zwar tiefer, dunkler und weniger rotstichig sind, die jedoch im Vergleich zu Miloriblau immer noch einen unerwünschten Rotstich in den Lackierungen aufweisen, da das Rückstreuvermögen der Non Flop-Blues höher liegt als das von Miloriblau.

Ein hohes Rückstreuvermögen führt bei deckender Purtonfärbung zu einem hohen Reflexionsgrad. So liegen die Reflexionswerte der Purtonfärbung eines hochtransparenten $\alpha$-Kupferphthalocyanins sowie eines Non Flop-Blues (Chlorgehalt 13 Gew.%) mit 2 % (bei 458 nm) bzw. mit 2,15 % (bei 474 nm) deutlich höher als der Reflexionswert einer Miloriblau-Purtonfärbung, die mit 0,1 % (im gleichen Wellenlängenbereich) einer schwarzen Färbung sehr nahe kommt.

Dagegen besitzt das erfindungsgemäße feinteilige X-Phthalocyanin ein äußerst geringes Streuvermögen. Volltonlackierungen, die mit dem feinteiligen, transparenten metallfreien Phthalocyanin der X-Modifikation angefertigt werden, weisen praktisch keinen Rotstich mehr auf.

Der Reflexionswert der Purtonfärbung des erfindungsgemäßen feinteiligen, transparenten metallfreien X-Phthalocyanins kommt nämlich mit 0,55 % (bei 460 nm) dem des Miloriblau äußerst nahe. Verglichen damit liegen auch die Purtonfärbungen von metallfreiem X-Phthalocyanin des Standes der Technik (US-A-3 357 989, Beispiel 1 und US-A-3 594 163, Beispiel 1) mit 1,15 % (bei 460 nm) bzw. mit 1,92 (bei 470 nm) deutlich höher.

Als Lackbindemittel, in die die erfindungsgemäßen metallfreien Phthalocyanine der X-Modifikation eingesetzt werden können, kommen beispielsweise lufttrocknende Systeme, z.B. langölige Alkydharze oder Nitrolacke, Einbrennsysteme auf Basis von kurz- oder mittelöligen Alkydharzen, Polyestern oder Acrylatharzen (Thermosetting und Thermoplastic Acrylics) in Kombination mit Aminoharzen, wie Harnstoff- oder Melaminharzen, 2 K-Systeme, z.B. Polyurethane oder Epoxidharze sowie Kombinationen dieser Systeme in Betracht. Weiterhin sind wäßrige Bindemittel auf Basis von Primär- und Sekundärdispersionen sowie Mikrogele zu nennen.

Kombiniert man beispielsweise das erfindungsgemäße X-Phthalocyanin mit geringen Mengen an Titandioxid, wie es auch beim Einsatz von Miloriblau in der Praxis geschieht, so erhält man tiefe grünstichige blauschwarze Lackierungen, die sich von denen auf Basis von Miloriblau praktisch nicht unterscheiden. Solche Kombinationen können z.B. auch in Wasserbasislacken dispergiert und verarbeitet werden, in denen Miloriblau zu einem Koagulieren des Bindemittels führt. (Wasserverdünnbare Überzugsmittel zur Herstellung von Zweischichtlackierungen sind z.B. in der EP-A-28 886 oder EP-A-38 127 beschrieben).

Zur Charakterisierung des neuen feinteiligen, transparenten metallfreien X-Phthalocyanins unter Anwendungsbedindungen kann die farbmetrische Bestimmung des Farbabstandes von deckend gespritzten Purtonlackierungen gegen einen Schwarzstandard herangezogen werden. Je großer der gemäß DIN 6174 gemessene ΔE-Wert ist, desto stärker weicht das entsprechende Pigment von einem neutralen Schwarz ab. Die nach den Methoden des Standes der Technik (US-A-3 357 989 und US-A-3 594 1631 hergestellten Produkte haben einen viel röteren und helleren Purton als die erfindungsgemäßen Pigmente und weisen dementsprechend in Übereinstimmung mit der visuellen Bewertung einen deutlich höheren ΔE-Wert auf. Auch feinteilige $\alpha$-Kupferphthalocyanine und Non Flop-Blues weisen erheblich höhere ΔE-Werte auf als die erfindungsgemäßen Phthalocyanine.

Zwar weisen, wie oben bereits gezeigt, die neuen feinteiligen transparenten metallfreien X-Phthalocyanine im reinen Purton immer noch ein etwas höheres Streuvermögen als Miloriblau auf, besitzen jedoch dessen anwendungstechnische Nachteile nicht. Sie stellen auf dem Anstrichmittelsektor somit eine technisch günstige Alternative zu Miloriblau dar.

Das erfindungsgemäße Pigment eignet sich außerdem vorteilhaft für Druckfarben. Auf dem Druckfarbengebiet dominieren bislang im Blau-(Cyan)-Bereich $\beta$-Kupferphthalocyanine in flüssigen und öligen, pastösen Farben. Obwohl diese Pigmente relativ preisgünstig, farbstark und hochlichtecht sind, weisen sie dennoch einige Nachteile auf. An erster Stelle ist die Gegenwart von Kupfer zu nennen. Diese Produkte können von der Synthese her ionogenes Kupfer enthalten, das wasserlöslich ist und die Mikroorganismen in Kläranlagen abtöten kann. Zu den weiteren Nachteilen der $\beta$-Kupferphthalocyanine gehören ihre Neigung zum Bronzieren und die Farbtondrift bei unterschiedlicher Pigmentierungshöhe.

Dagegen sind die neuen Produkte schwermetallfrei. Außerdem neigt das erfindungsgemäße Phthalocyanin der X-Modifikation weniger zum Bronzieren als $\beta$-Kupferphthalocyanin. Schließlich ist sein Farbton im Druck praktisch unabhängig von der Pigmentierungshöhe, während die Nuance bei $\beta$-Kupferphthalocyanin mit steigender Pigmentierung immer rotstichiger wird.

Als Druckfarben, in denen die neuen X-Phthalocyanine angewendet werden können, kommen z.B. Tiefdruckfarben für den Illustrationstiefdruck mit Toluol oder Benzin als Lösungsmittel, wäßrige und lösungsmittelhaltige Verpackungsdruckfarben auf Basis von Nitrocellulose, Acrylaten, Maleinaten oder Polyurethanen sowie Kombinationen dieser Systeme in Betracht. Weiterhin sind ölige, pastöse Offsetfarben für den Rollen- und Bogenoffset zu nennen.

Das erfindungsgemäße Produkt eignet sich auch in vorteilhafter Weise als Pigment für thermoplastische oder duroplastische Kunststoffe, wie HD-Polyethylen, LD-Polyethylen, Polypropylen, Weich- oder Hart-PVC, Polystyrol, Terpolymerisate aus Styrol, Butadien und Acrylnitril (ABS), Polyphenylenoxid oder Polyamide.

Die nachfolgenden Beispiele sollen die Erfindung näher erläutern.

Die an den Pigmenten der Beispiele 1 bis 6 bestimmten physikalischen Daten: spezifische Oberfläche $SN_2$, Mediandurchmesser $d_{50,3}$, Standardabweichung s und d für eine Durchgangssumme von 80 Gew.% der Teilchen, sind in der Tabelle nach dem Beispiel 6 zusammengestellt.

Beispiel 1

a) Ein Phthalocyanin der $\beta$-Form mit einem Phthalocyaningehalt von 96 Gew.% wurde zunächst (analog der US-A-3 357 989, Beispiel 1) durch Umfällen aus konzentrierter Schwefelsäure in Wasser, Waschen mit Wasser bis zum Neutralpunkt, Auswaschen von Nebenprodukten mit Aceton und anschließends Trocknen bei Raumtemperatur in feinkristallines Phthalocyanin der $\alpha$-Modifikation überführt. Die Ausbeute an $\alpha$-Phthalocyanin betrug 81,5 %, bezogen auf die Einsatzmenge des $\beta$-Phthalocyanins.

b) 50 g $\alpha$-Phthalocyanin aus a) wurden in einen 840 ml Stahlbehälter eingetragen, der etwa zur Häfte mit Stahlkugeln (Durchmesser 15 mm) gefüllt war und auf einer Laborschwingmühle, die mit 25 Hz bei ca. 1,5 mm Amplitudenhub schwingt, 40 Stunden bei einer Manteltemperatur von 40°C trocken vermahlen. Es entstand ein Gemisch der $\alpha$- und X-Form des Phthalocyanins im Gewichtsverhältnis von 40:60 (Ausbeute: 48 g).

c) 10 g des $\alpha$/X-Modifikationsgemisches aus b) wurden in einen 500 ml Glas-Dreihalskolben eingefüllt, der zu ca. 40 Vol.% mit einer Schüttung von Glaskugeln (Durchmesser 3 mm) sowie mit 200 g Methylethylketon befüllt war. Der gesamte Ansatz wurde 5 Stunden bei 25°C mit 70 Umdrehungen/min gerührt. Nach Absaugen der Pigmentsuspension auf einer Nutsche, mehrfachem Nachwaschen mit destilliertem Wasser, Absaugen und Trocknung bei Raumtemperatur wurden 9.2 g Pigment erhalten. Nach dem Röntgenbeugungsdiagramm (aufgenommen mit CuK$\alpha$-Strahlung) wurde das so erhaltene Pigmentpulver als Phthalocyanin der reinen X-Form mit den für die X-Form typischen 2 $\delta$-Beugungswinkeln bei 7,4, 9,0. 16,6, 17,25, 22,1 und 28,35 identifiziert. Es handelt sich um ein äußerst feinteiliges Pigment. Die Feinteiligkeit kann durch die spezifische Oberfläche von 92 m$^2$/g belegt werden. (N$_2$-Adsorption am Pigmentpulver gemäß DIN 66 131).

Beispiel 2 (Vergleich - analog Beispiel 1 der US-A-3 594 163)

92 g des gemäß Beispiel 1 durch Umlösen aus Schwefelsäure erhaltenen Phthalocyanins der $\alpha$-Form wurden mit 8 g des gemäß Beispiel 1b) erhaltenen $\alpha$/X-Phasengemischs (das entspricht 5 Gew.% X-Phthalocyanin) versetzt und analog Beispiel 1c) in Methylethylketon bei 25°C 16 Stunden lang behandelt. Man erhielt ein Phthalocyanin der X-Modifikation (Ausbeute: 95 g). Seine spezifische Oberfläche betrug nur 50 m$^2$/g.

Beispiel 3

a) Je 3200 g Phthalocyanin der $\beta$-Form wurden in die beiden Mahlkammern einer Palla® 20 U-Schwingmühle (Fa. Klöckner-Humboldt-Deutz, Köln) eingefüllt. Jedes Mahlrohr vom Rauminhalt 23 l war zu etwa 2/3 mit Stahlkugeln (Durchmesser 20 mm) beschickt. Der gesamte Ansatz wurde bei der mühlenspezifischen Kreisschwingung von 1000 U/min und 10 mm Schwingkreisdurchmesser 48 Stunden lang bei einer Manteltemperatur von 65°C behandelt. Das ausgetragene Pigment (Menge: 6,28 kg) war nach der Röntgenbeugungsanalyse ein Gemisch der $\alpha$- und X-Form (Gewichtsverhältnis etwa 50:50), in dem keine $\beta$-Form nachzuweisen war.

b) In einen 1000 ml-Dreihalsrundkolben wurden 600 g Methylethylketon vorgelegt und 30 g des obigen $\alpha$/X-Formgemisches eingetragen. In Abwesenheit von Mahlkörpern wurde die Suspension unter den in Beispiel 1 genannten Rührbedingungen auf Siedetemperatur (80°C) erwärmt und 4 Stunden unter Rückfluß gehalten. Nach Abkühlen, Absaugen der Pigmentsuspension, reichlichem Nachwaschen mit Wasser und anschließender Trocknung wurde ein Pigmentpulver erhalten (Ausbeute: 90 %). Nach Röntgenbeugung liegt die reine X-Form des metallfreien Phthalocyanins vor. Spezifische Oberfläche: 101 m$^2$/g. Es handelt sich um ein äußerst feinteiliges Pigment.

Beispiel 4

30 g des gemäß Beispiel 3a) durch Mahlung erhaltenen $\alpha$/X-Modifikationsgemischs wurde wie unter b) beschrieben, jedoch in 600 g Isobutanol, bei Siedetemperatur (108°C) behandelt. Nach Isolierung erhielt man ein Phthalocyaninpigment (Ausbeute: 92 %) der reinen X-Form mit einer spezifischen Oberfläche von 91 m$^2$/g.

Beispiel 5

Man verfuhr analog Beispiel 4, jedoch wurden 1,5 g eines Salzes aus Trisdiethylaminomethylenkupferphthalocyanin mit Dodecylbenzolsulfonsäure (Molverhältnis 1:3) zusammen mit 28,5 g des $\alpha$/X-Modifikationsgemisches in das Isobutanol eingetragen. Nach üblicher Isolierung wurde ein Pigmentpulver erhalten (Ausbeute: 93,5 %), das nach der Röntgenbeugungsanalyse in der reinen X-Form vorliegt. Die spezifische Oberfläche betrug 93 $m^2$/g.

Beispiel 6

30 g des gemäß Beispiel 3a) erhaltenen $\alpha$/X-Phasengemisches des Phthalocyanins wurden 6 Stunden bei 89°C in einer Mischung aus 450 g Isobutanol und 150 g Wasser gerührt. Man isolierte ein Pigmentpulver (Ausbeute: 92 %), das nach der Röntgenbeugungsanalyse ein metallfreies Phthalocyanin der X-Modifikation ist. Spezifische Oberfläche: 99 $m^2$/g.

Tabelle: Teilchengröße und -verteilung in Buchdruckfirnis Grinding Base 100 S

| Beispiel | spezifische Oberfläche $SN_2$ [$m^2$/g] | Median- durchmesser $d_{50,3}$ [$\mu$m] | Standard- abweichung s | d für Q = 0,80[1] [$\mu$m] |
|---|---|---|---|---|
| 1 | 92 | 0,07 | 0,25 | 0,09 |
| 2 (St.d.T.) | 50 | 0,13 | 0,35 | 0,18 |
| 3 | 101 | 0,07 | 0,23 | 0,09 |
| 4 | 91 | 0,07 | 0,23 | 0,09 |
| 5 | 93 | 0,05 | 0,28 | 0,07 |
| 6 | 99 | 0,06 | 0.25 | 0,08 |

[1] Q = 0,80≙ Durchgangssumme für 80 Gew.%, d.h. 80 Gew.% der Teilchen haben einen Stokes-äquivalentdurchmesser von ≤d.

Beispiel 7

5 g phasenreines, feinteiliges metallfreies Phthalocyanin der X-Modifikation, erhalten nach Beispiel 5, wurden zusammen mit 95 g eines Alkyd/Melaminlackes (kurzöliges Alkydharz aus synthetischer Isononansäure, Phthalsäureanhydrid und Trimethylolpropan in Xylol sowie butyliertes Melamin/Formaldehyd in Xylol/Butanol) in ein 370 ml-Verpackungsglas mit Twist-Off-Deckel mit 100 ml Glaskugeln (Durchmesser ca. 3 mm) als Mahlkörper gegeben und 1 Stunde auf einer Laborschüttelmaschine (Red Devil®) dispergiert. Man erhielt einen niedrig-viskosen Lack, der nach Verdünnen mit Xylol auf Spritzviskosität auf grundierte Stahlbleche aufgespritzt und nach 15-minütigem Ablüften 30 min bei 30°C eingebrannt wurde. Man erhielt eine tiefe, blauschwarze Lackierung mit hohem Glanz.

Beispiel 8

5 g feinteiliges, phasenreines, metallfreies Phthalocyanin der X-Form, hergestellt nach Beispiel 6 und 0,25 g Tris-diethylaminomethylenkupferphthalocyanin(als rekristalisationshemmendes Mittel) wurden in 95 g eines Thermosetting Acrylatharzes (35 gew.%ig in Xylol) in einer 370 ml Glasflasche auf dem Red Devil mit 100 ml Glaskugeln (Durchmesser 3 mm) eine Stunde dispergiert. Nach dem Abkühlen wurde mit 20 Teilen eines reaktiven Melamin/Formaldehydharzes in Butanol/Xylol komplettiert. Der so hergestellte blaue Einbrennlack wurde mit Xylol auf Spritzviskosität eingestellt und auf grundierte Stahlbleche aufgespritzt. Man brannte 30 min bei 130°C ein und erhielt eine blauschwarze Lackierung mit hohem Glanz.

Beispiel 9

15 g des nach Beispiel 5 hergestellten metallfreien Phthalocyanins, 62,5 g einer 50 gew.%igen Lösung eines hydroxylgruppenhaltigen Acrylatharzes in Xylol/Ethylglykolacetat (2:1) sowie 37,5 g eines Lösungsmittelgemisches, bestehend aus 50 Gew.% Methylethylketon, 40 Gew.% Xylol und 10 Gew.% Ethylenglykolmonoethylether-acetat, wurden in einem 370 ml-Glas mit 125 ml Glaskugeln (Durchmesser: 3 mm) 1 Stunde auf dem Red Devil dispergiert. Nach dem Anreiben wurden weitere 74,5 g der Lösung des Acrylatharzes zugesetzt.

Das Mahlgut wurde komplettiert mit 31.5 g einer 75 gew.%igen Lösung eines aliphatischen Diisocyants in Methoxypropylacetat/Xylol. Nach Einstellen auf Spritzviskosität mit dem oben angegebenen Lösungsmittelgemisch wurde der Lack auf grundierte Stahlbleche aufgespritzt.

Nach 15-minütigem Ablüften bei Raumtemperatur härtete man bei 80°C aus und erhielt eine tiefblaue Lackierung, die von einer Vergleichsfärbung mit Miloriblau nur unwesentlich in Farbtiefe und Farbton abweicht.

Beispiel 10

500 g Polyethylen (Hochdruck-Type), 5 g Titandioxid, 0,5 g Produkt aus Beispiel 5 und 0,015 g Trimethylendiethylaminokupferphthalocyanin wurden in einem Trommelmischer trockengemischt. Das Gemisch wurde in den Einfülltrichter einer vorgeheizten Spritzgußmaschine eingefüllt und zu 4 x 6 cm großen Plättchen verspritzt. Die Spritztemperatur betrug zunächst 200°C und wurde dann in Intervallen von 20 Grad auf 280°C gesteigert. Die jeweilige Verweilzeit vor dem Spritzen betrug 5 min.

Bei dieser Arbeitsweise erhielt man grünstichig blaue Plättchen. Die Temperaturstabilität des eingesetzten Pigmentes beträgt 260°C (Farbmetrische Auswertung nach DIN 6174: $\Delta E < 3$, gegenüber einem bei 200°C hergestellten Spritzling).

Beispiel 11

12 g metallfreies Phthalocyanin der X-Modifikation, hergestellt nach Beispiel 5 wurden in 88 g der Lösung eines phenolmodifizierten Kolophoniumharzes in Toluol (Feststoffgehalt ca. 35 Gew.%, Auslaufzeit im DIN 4-Becher: 14 sec.) auf dem Red Devil in einem Polyethylenbecher unter Zusatz von 300 g Stahlkugeln (Durchmesser 2 bis 3 mm) 30 min dispergiert. Nach dem Abkühlen auf Raumtemperatur wurde mit Bindemittellösung auf ein Pigmentgehalt von 8 Gew.% verdünnt. Die so hergestellte Druckfarbe wurde mit einem Messerrakel auf Pergamentpapier abgerakelt. Man erhielt eine tiefblaue Färbung, die im Vergleich zu einer mit β-Kupferphthalocyaninangefertigen Vergleichsfärbung ca. 20 % farbstärker, etwas grüner und trüber ist.

Metallfreies Phthalocyanin der α-Modifikation, in gleicher Weise dispergiert und ausgefärbt wie das Pigment aus Beispiel 5, wies einen deutlich grüneren Farbton bei etwa 10 % niedrigerer Farbstärke auf.

Beispiel 12

18 g feinteiliges Phthalocyanin der X-Modifikation, hergestellt nach Beispiel 1, wurden in 82 g eines Bogenoffset-Firnis aus 38 g eines kolophoniummodifizierten Phenolharzes, 42 g Lackleinöl sowie 20 g eines Mineralöls mit einem Siedepunkt von 260 bis 290°C zunächst 10 min. im Dissolver vordispergiert und anschließend auf der Dreiwalze ausdispergiert (3 Passagen auf 15 bar). Man erhielt eine 18 gew.%ige Bogenoffsetfarbe. In Kombination mit TiO₂ (1:20) erwies sich das erfindungsgemäße Pigment aus Beispiel 1 als 20 % farbstärker als ein β-Kupferphthalocyanin bei einem etwas grünerem und trüberem Farbton. Ein metallfreies Phthalocyanin der α-Modifikation des Standes der Technik ist ca. 10 % farbschwächer als das erfindungsgemäße Pigment und hat einen deutlich grüneren Farbton.

Im Fogra-Druck (Druckfarben mit Pigmentkonzentrationen von 18, 15, 10 und 5 Gew.% wurden in unterschiedlicher Schichtdicke auf gestrichenes Papier gedruckt; Gerät: Prüfbau, Dr. Dürner) hatte das erfindungsgemäße Pigment einen von der Pigmentkonzentration bzw. Schichtdicke weitgehend unabhängigen Farbton ($\Delta H$ nach DIN 6174 = 5, Farbtiefekennwert B: -16 bis +16 bei 1/3 Standardfarbtiefe). Auch bei dem oben genannten metallfreien Phthalocyanin der α-Modifikation des Standes der Technik betrug die Farbtondrift im oben angegebenen Bereich nur 6 Einheiten, während bei β-Kupferphthalocyanin die Farbtonverschiebung 18 Einheiten betrug ($\Delta H = 18$).

Beispiel 13

Man arbeitete wie in Beispiel 12, verwendete jedoch als Bindemittel eine 17,5 gew.%ige Lösung einer alkohollöslichen Nitrocellulose (in Ethanol/Essigester 3:1). Nach der Dispergierung verdünnte man auf einen Pigmentgehalt von 6 Gew.% und stellte dann mit Essigester/Alkohol auf eine Druckviskosität von 25 sec/DIN 3-Becher ein. Auf einer Handdruckmaschine wurde dann ein Tiefdruck auf gestrichenem Papier angefertigt (Tiefe der Näpfchen: 34, 24 und 16 $\mu$m).

Man erhielt intensive blaugrüne Färbungen mit sehr gutem Glanz, die nach farbmetrischer Auswertung 10 % farbstärker sowie etwas grüner und trüber als Vergleichsfärbungen mit einem $\beta$-Kupferphthalocyanin sind.

Beispiel 14

15 g Phthalocyanin, hergestellt nach Beispiel 4, wurden in 135 g einer 14 gew.%igen Lösung eines Acrylatharzes in verdünntem Ammoniak/Isopropanol (5:2) 1 Stunde auf dem Red Devil in einem 300 ml-Polyethylenbecher unter Zusatz von 300 g Stahlkugeln (Durchmesser 2 bis 3 mm) dispergiert. Man erhielt eine niedrig-viskose Druckfarbe, die bei 3tägiger Lagerung bei 50°C Farbton, Farbstärke und Viskosität praktisch nicht ändert.

Auf Cellulosepapier abgerakelt erhielt man mit dieser Druckfarbe Färbungen, die deutlich röter und farbstärker sind als solche mit der $\alpha$-Modifikation des metallfreien Phthalocyanins und damit im Farbton näher beim $\beta-$Kupferphthalocyanin liegen.

## Patentansprüche

1. Feinteiliges, transparentes metallfreies Phthalocyanin der X-Modifikation dadurch gekennzeichnet, daß es eine spezifische Oberfläche von 75 bis 120 $m^2$/g aufweist und daß mindestens 80 Gew.% der Phthalocyaninteilchen einen Stokes-äquivalenten Durchmesser von $\leq$ 0,12 $\mu$m aufweisen.

2. Feinteiliges Phthalocyanin gemäß Anspruch 1, dadurch gekennzeichnet, daß es einen Stokes-äquivalenten Durchmesser von $\leq$ 0`10 $\mu$m aufweist.

3. Feinteiliges Phthalocyanin gemäß Anspruch 1, dadurch gekennzeichnet, daß es einen Stokes-äquivalenten Durchmesser von $\leq$ 0,095 $\mu$m aufweist.

4. Verwendung von feinteiligem, transparentem metallfreiem Phthalocyanin der X-Modifikation gemäß Anspruch 1, 2 oder 3 als Pigment.

## Claims

1. A finely divided, transparent, metal-free X-phthalocyanine, wherein the said phthalocyanine has a specific surface area of from 75 to 120 $m^2$/g and not less than 80% by weight of the phthalocyanine particles have a Stokes-equivalent diameter of $\leq$0.12 $\mu$m.

2. A finely divided phthalocyanine as claimed in claim 1, which has a Stokes-equivalent diameter of $\leq$0.10 $\mu$m.

3. A finely divided phthalocyanine as claimed in claim 1, which has a Stokes-equivalent diameter of $\leq$0.095 $\mu$m.

4. Use of a finely divided, transparent, metal-free X-phthalocyanine as claimed in claim 1, 2 or 3 as a pigment.

## Revendications

1. Phtalocyanine dépourvue de métal, transparente, à fins grains, de la variante X, caractérisée en ce qu'elle présente une surface spécifique de 75 à 120 $m^2$/g et en ce qu'au moins 80% en poids des particules de la phtalocyanine présentent un diamètre équivalent de Stokes égal ou inférieur à 0,12 $\mu$m.

2. Phtalocyanine à fins grains selon la revendication 1, caractérisée en ce qu'elle présente un diamètre équivalent de Stokes égal ou inférieur à 0,10 $\mu$m.

3. Phtalocyanine à fins grains selon la revendication 1, caractérisée en ce qu'elle présente un diamètre équivalent de Stokes égal ou inférieur à 0,095 $\mu$m.

4. Utilisation d'une phtalocyanine dépourvue de métal, transparente, à fins grains, de la variante X, selon la revendication 1, 2 ou 3, à titre de pigment.